# EUROPÄISCHE PATENTSCHRIFT

(11) **EP 3 123 483 B1**
(45) Veröffentlichungstag und Bekanntmachung des Hinweises auf die Patenterteilung: **16.01.2019**
(21) Anmeldenummer: 15731491.5
(22) Anmeldetag: 26.03.2015
(51) Int. Cl.: H01B 1/22, H01F 1/01, D01F 1/09, D01F 6/62

(54) **FASER AUS KUNSTSTOFF MIT ELEKTRISCHER LEITFÄHIGKEIT**
PLASTIC FIBRE WITH ELECTRICAL CONDUCTIVITY
FIBRE EN PLASTIQUE PRÉSENTANT UNE CONDUCTIVITÉ ÉLECTRIQUE

(30) Priorität: 26.03.2014 DE 102014004592
(43) Veröffentlichungstag der Anmeldung: 01.02.2017
(60) Teilanmeldung: 18191210.6
(73) Patentinhaber: Feegoo Lizenz GmbH, 29303 Bergen OT Wardböhmen (DE)
(72) Erfinder: VAN HATTUM, Edgar, Johannes, 29303 Bergen (DE)
(74) Vertreter: Prinz & Partner mbB
(86) Internationale Anmeldenummer: PCT/DE2015/000153
(87) Internationale Veröffentlichungsnummer: WO 2015/144121

(56) Entgegenhaltungen:
- WO-A2-2010/108883
- CH-A- 437 622
- CN-A- 103 422 014
- DE-A1- 2 251 071
- DE-B- 1 176 855
- DE-U1-202012 009 083
- US-A- 3 506 744
- US-A1- 2005 019 572
- US-A1- 2008 139 065
- TEGUS O ET AL: "TOPICAL REVIEW - MAGNETISM, MAGNETIC MATERIALS, AND INTERDISCIPLINARY RESEARCH;Phase transitions and magnetocaloric effects in intermetallic compounds MnFeX (X=P, As, Si, Ge)", CHINESE PHYSICS B, CHINESE PHYSICS B, BRISTOL GB, Bd. 22, Nr. 3, 14. März 2013 (2013-03-14), Seite 37506, XP020241977, ISSN: 1674-1056, DOI: 10.1088/1674-1056/22/3/037506

## Beschreibung

Die Erfindung betrifft eine Faser aus Kunststoff mit elektrischer Leitfähigkeit, wobei das Fasermaterial durch einen Grundwerkstoff aus PET gebildet ist, welchem Elemente eingelagert werden.

Es ist seit geraumer Zeit bekannter Stand der Technik, Kunststoffe oder Kunststoffkompositwerkstoffe für verschiedene technische Anwendungen, beispielsweise als Basismaterial für Kleidungsstücke, als Isolationsmaterial usw. einzusetzen. Eine dieser in großem Umfang eingesetzten Kunststoffsorten ist das Polyethylenterephthalat (PET). Dieser PET-Kunststoff ist ein durch Polykondensation hergestellter thermoplastischer Kunststoff aus der Familie der Polyester.

PET ist von polarer Grundstruktur und weist starke zwischenmolekulare Kräfte auf. PET-Moleküle sind darüber hinaus linear, d.h. ohne Vernetzungen aufgebaut. Aufgrund der polar-linearen Struktur ist PET durch teilkristalline Bereiche und Fasern gekennzeichnet, die eine hohe Bruchfestigkeit und Formbeständigkeit auch in Temperaturbereichen von über 80°C verursachen. Somit ist PET als Werkstoff generell auch für diese Temperaturbereiche geeignet.

PET-Werkstoffe werden aus Monomeren wie Terephthalsäure beziehungsweise Benzoldicarbonsäure und Ethylenglycol beziehungsweise Dihydroxyethan oder Ethandiol hergestellt. Um für die gewerbliche Anwendbarkeit relevante Mengen produzieren zu können, erfolgt die großtechnische Herstellung durch Umesterung von Dimethylterephthalat mit Ethandiol. Im Rahmen dieser Gleichgewichtsreaktion entsteht eine unerwünschte Mehrmenge von Ethandiol, beziehungsweise es ist für die Reaktion erforderlich, dass dieser Stoff durch die Reaktionsführung wieder abdestilliert wird, um das Gleichgewicht günstig zu beeinflussen. Die alternativ mögliche Schmelzphasenpolykondensation ist für die Produktion großer Mengen ungeeignet, weil diese Herstellungsform zu große Zeiträume beansprucht. Um eine hohe PET-Güte zu erreichen, wird abhängig vom gewünschten Verwendungszweck eine Festphasenpolykondensation nachgeschaltet, um eine weitere Kondensation zu erreichen. Eine weitere bekannte Herstellungsmöglichkeit von PET besteht in der Veresterung von Ethandiol mit Terephthalsäure.

Generell handelt es sich bei den PET-Molekülen um langkettige Strukturen, die überwiegend aus Kohlenstoff, Wasserstoff und einigen weiteren Atomen bestehen. Die Moleküle besitzen eine spiral- bis knäuelartige Anordnung. Dies führt dazu, dass insbesondere im amorphen Zustand eine Vielzahl von Freiräumen im atomaren Bereich zwischen den Molekülen vorhanden sind. Durch eine axiale oder biaxiale Orientierung des Materials können diese Freiräume verkleinert werden, was beispielsweise zu einer höheren Festigkeit des Materials und zu einer verringerten Gasdurchlässigkeit führt.

Neben der Anwendung von PET in reiner Form ist aus dem Stand der Technik auch dessen Werkstoffmodifikation bekannt. Als Basismaterial für Kompositwerkstoffe können dem thermoplastischen Kunststoff andere Elemente hinzugefügt werden. Im Reinzustand handelt es sich bei PET im Wesentlichen um einen elektrischen Nichtleiter. Durch eine Einlagerung beispielsweise von metallischen Atomen in die Freiräume zwischen den Molekülen oder durch eine Anlagerung von beispielsweise metallischen Atomen an die PET-Moleküle können dem Material in einem gewissen Umfang elektrisch leitfähige Eigenschaften verliehen werden. Entsprechend metallisch dotierte PET-Fasern leiten somit bei einem Anlegen einer Spannung einen elektrischen Strom.

Weiterhin ist bekannt, dass verschiedene, vorwiegend metallische Werkstoffe wie z.B. Legierungen mit Gadolinium oder anderen Seltene-Erden-Metalle, einen magnetokalorischen Effekt aufweisen. Bei dem magnetokalorischen Effekt erwärmt sich das Material, wenn es einem Magnetfeld ausgesetzt wird und es kühlt sich wieder ab, wenn der Magnetfeldeinfluss beendet wird. Ursache dieser Erwärmungsreaktion ist die Ausrichtung der magnetischen Momente des Materials durch das Magnetfeld und deren Abhängigkeit von der Magnetfeldstärke. Durch die Ausrichtungsgeschwindigkeit der magnetischen Momente entsteht Wärme. Eine mögliche Anwendung könnte die Verwendung als Kühlmittel sein, da durch periodische Magnetisierung und gleichzeitiges Abführen der entstehenden Wärme eine Kühlwirkung erreicht werden kann.

Der magnetokalorische Effekt ist legierungsabhängig stark hysteresebehaftet. Um den magnetokalorischen Effekt auch im Zusammenhang mit Anwendungen zu realisieren, die eine ggf. additive mechanische Belastung bedeuten, werden Legierungen gesucht, die diese physikalischen Effekte und Eigenschaften kombinieren. Ein weiteres Problem der technischen Anwendung dieses Effektes neben dem unerwünschten Hystereseverhalten ist die Tatsache, dass bisher dieser Effekt bei bekannten Legierungen und Werkstoffzusammensetzungen vergleichsweise schwach ausgeprägt ist.

Die US 2005/0019572 A1 beschreibt Polymerchips, in denen Nanopartikel eines Metalls oder Metalloxids homogen verteilt sind. Die Chips können zu Fasern extrudiert oder versponnen werden. Die Metallpartikel verleihen den Polymerchips desinfizierende und antibiotische Eigenschaften.

Aus der DE 11 76 855 B sind Polyesterfasern bekannt, die zum Schutz vor Verfärbung mit Nickel, Kupfer, Aluminium, Mangan oder Eisen in einer Menge von mindestens 0,2 % und bis zu 2 %, bezogen auf den faserbildenden Polyester, und einer Teilchengröße von 0,25 mm bis 10 mm, versetzt sind. Gemäß einer Ausführungsform werden die Metallteilchen von dem Polymer während des Schmelzspinnens einem geeigneten Filter entfernt.

Die CH 437622 C betrifft schmelzgesponnene Polymerfasern, die einen Gehalt von 0,1 - 5 Gew.-% eines feinteiligen Terephthalatsalzes aufweisen. Die US 3,506,744 A zeigt die Dotierung von Polyesterfilamenten mit Alkalimetallsalzen wie Natriumacetat. Durch den Zusatz der Metallsalze sollen die elektrostatischen Eigenschaften der Filamente beeinflusst werden.

Aus der US 2008/0139065 A1 sind leitfähige thermoplastische Zusammensetzungen bekannt aus denen leitfähige Fasern und Monofilamente gebildet werden können. Die Zusammensetzungen enthalten 0,5 - 40 Gew.-% eines leitfähigen Füllstoffs, insbesondere Ruß oder Kohlenstoff-Nanoröhren.

Aus der DE 22 51 071 A ist eine verstreckte leitende Faser aus mindestens einem künstlichen polymeren Material bekannt, die einen elektrischen Widerstand von weniger als 5 · 10⁹ Ω/cm aufweist, wobei eine zusammenhängende äußere Oberflächenschicht der verstreckten Faser eingebettete Teilchen aus einem leitenden Material aufweist. Die Teilchen können einen mittleren Durchmesser von weniger als 1 µm aufweisen.

In der CN 103 422 014 A und der WO 2010/108883 A2 sowie dem Artikel von Tegus et al., "Topical Review - Magnetism, Magnetic Materials, and Interdisciplinary Resarch; Phase transitions and magnetocaloric effects in intermetallic compounds, MnFeX (X=P, As, Si, Ge)"; Chinese Physics B, Bristol GB, Bd. 22, Nr. 3, (2013-03-14), Seite 37506, sind magnetokalorische Legierungen im Einzelnen beschrieben.

Der Skin-Effekt, auch Stromverdrängung, ist ein Effekt in von höherfrequentem Wechselstrom durchflossenen elektrischen Leitern, durch den die Stromdichte im Inneren eines Leiters niedriger ist als in äußeren Bereichen. Er tritt in relativ zur SkinTiefe dicken Leitern und auch bei elektrisch leitfähigen Abschirmungen und Leitungsschirmen auf. Der Skin-Effekt begünstigt mit zunehmender Frequenz die Transferimpedanz geschirmter Leitungen und die Schirmdämpfung leitfähiger Abschirmungen, erhöht aber den Widerstandsbelag einer elektrischen Leitung. Das bedeutet praktisch, dass die Skintiefe, d.h. die Leitschichtdicke, werkstoffabhängig mit zunehmender Wechselstromfrequenz abnimmt. Infolge hoher Wechselstromfrequenzen von mehr als 100 kHz ist innerhalb einer Kupferleitung eine Skintiefe von 0,21 mm vorliegend.

Aufgabe der vorliegenden Erfindung ist es, eine Faser der einleitend genannten Art derart bereitzustellen, dass eine genau definierte Emission und/oder Absorption von Strahlungsenergie und dass eine kostengünstige Produktion möglich ist.

Erfindungsgemäß wird die Aufgabe durch eine Kunststofffaser gemäß Anspruch 1 gelöst, bei der eine Werkstoffgrundkomponente durch PET oder Aramid gebildet wird, welchem durch geeignete Dotierungselemente Eigenschaften eingeprägt werden.

Die zu verwendenden Dotierungselemente werden erfindungsgemäß durch MnFe-Phosphorverbindungen, oder durch MnFe(As, P_{w}GeₓSi_{z})ₛ mit x = 0,3-0,7 und w kleiner gleich 1-x und z = 1-x-w, oder durch FeMn-Phosphor-Verbindungen mit As,Si-Phosphor-Substitution und kombiniert mit La(FeMnP)AICo, oder durch Verbindungen mit Mn-Zn, oder durch FeMn-Phosphor-Verbindungen mit As,Si-Phosphor-Substitution und gegebenenfalls kombiniert mit La(FeMnP)AICo, oder durch Verbindungen mit Mn-Zn, oder durch eine Legierung von FeMnP_{0,7}Ge_{0,3}, oder durch eine Legierung von FeMnP_{0,5}Ge_{0,5}, oder durch eine Legierung von Fe_{0,86}Mn_{1,14}P_{0,5}Si_{0,35}Ge_{0,15} gebildet.

Die Dotierungselemente können dem PET-Werkstoff zusätzlich die Fähigkeit zur wenigstens teilweisen Leitung elektrischer Energie verleihen. Die Dotierungselemente können zum einen Eigenschaften als Absorber für Strahlungsenergie generieren, zum anderen können sie Eigenschaften als elektrische Leiter generieren. Durch eine Einlagerung beispielsweise von metallischen Atomen in die Freiräume zwischen den Molekülen oder durch eine Anlagerung von beispielsweise metallischen Atomen an die PET-Moleküle können dem PET-Material in einem gewissen Umfang elektrisch leitfähige Eigenschaften verliehen werden.

Entsprechend metallisch dotierte PET-Fasern leiten somit bei einem Anlegen einer Spannung einen elektrischen Strom. Je nach elektrischem Widerstand dieses Kompositwerkstoffes generiert dieser in Abhängigkeit vom angelegten Strom Strahlung oder absorbiert diese. Die Effekte werden in Abhängigkeit vom zuvor beschriebenen Skin-Effekt und durch additive Absorption von Strahlungsenergie unterstützt. Das bedeutet, dass der erfindungsgemäße PET-Kompositwerkstoff eine neue Werkstoffalternative für die Strahlungsabsorption oder Strahlungsgenerierung zu den bekannten Metall-Fasermaterialien darstellt.

Zusätzlich werden die mechanischen Eigenschaften des PET hinsichtlich seiner Bruchfestigkeit und Formbeständigkeit auch in Temperaturbereichen von über 80°C genutzt, um dem Absorbermaterial Anwendungsbereiche mit diesen erhöhten mechanischen Anforderungen zu eröffnen.

Eine weitere Eigenschaft des erfindungsgemäßen Absorbermaterials besteht in seiner von den jeweiligen Dotierungselementen abhängigen Eigenschaft, wenigstens teilweise elektrisch leitfähig zu sein. Insbesondere wenn der PET-Kompositwerkstoff ein Basismaterial für eine beliebig geartete Wärmequelle darstellt, können die physikalischen Effekte der Absorbtionsfähigkeit und der elektrischen Leitfähigkeit für die Erhöhung der abzugebenden Wärmemenge kombiniert und somit erhöht werden dadurch, dass zusätzlich zur emittierten Wärmestrahlung aufgrund der Strahlungsabsorbtion mittels einer an das PET-Kompositmaterial angelegten Spannung infolge des elektrischen Widerstandes des Materials zusätzlich auf elektrischem Weg Wärmeenergie erzeugt wird.

Eine weiterhin interessante Anwendung des PET-Kompositwerkstoffes ist durch seine Eigenschaft eröffnet, den magnetokalorischen Effekt zu realisieren und gleichzeitig die dem PET zu eigenen verbesserten mechanischen Werkstoffeigenschaften aufzuweisen. Durch geeignete Dotierungselemente lassen sich dem erfindungsgemäßen Material somit auch Kühlwirkungseigenschaften einprägen.

Die erfindungsgemäße Lehre erkennt, dass die für die PET-Dotierung geeigneten Elemente MnFe-Phosphorverbindungen, MnFe(As,PwGexSiz)s; FeMn-Phosphor-Verbindungen mit As,Si-Phosphor - Substitution ggf. kombiniert mit La(FeMnP)AICo; Verbindungen mit Mn-Zn sind.

Eine erfindungsgemäße Alternative liegt in der Verwendung der Dotierungs-Strukturformel MnFe(As,P_{w}GeₓSi_{z})ₛ. Diese Verbindung verfügt über hohe Kühlfähigkeiten bei Temperaturen von 200 bis 600 K, insbesondere bei 280 bis 500 K. Diese Verbindung zeigt einen sehr starken magnetokalorischen Effekt. Der Einsatz dieses Kompounds ist umweltfreundlich aufgrund der Tatsache, dass die umweltproblematischen Substanzen, insbesondere die Mn-Moleküle, in der PET-Grundmatrix gebunden sind. Sehr effiziente Ergebnisse sind erzielbar, wenn x= 0,3-0,7 ist und w kleiner gleich 1-x und z = 1-x-w in seiner strukturellen Verbindung. Vorzugsweise ist in dieser spezifischen Einstellung das Material in einer hexagonalen Strukturierung des Fe₂P- realisiert.

Die Herstellung der verschiedenen Werkstoffzusammensetzungen kann in einer Kugelmühle und unter Schutzgasatmosphäre erfolgen.

Eine Legierung von 5 g FeMnP_{0,7}Ge_{0,3} mit einer kritischen Temperatur von etwa 350 K kann beispielsweise durch Mischen der reinen Elemente, die eine Qualität von 3N aufweisen, in den folgenden Mengen: FeMnP_{0,7}Ge_{0,3} hergestellt werden. In einer geschlossenen Kugelmühle werden diese Elemente unter einer schützenden Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt, bis eine Temperatur von etwa 800 bis 1050 GradC erreicht ist. Danach wird dieses auf eine Temperatur von etwa 650 GradC getempert. Die Legierung kristallisiert in einer hexagonalen Fe₂P-Struktur.

Eine Legierung von 5 g FeMnP_{0,5}Ge_{0,5} mit einer kritischen Temperatur von etwa 600 K wird durch Mischen der reinen Elemente, die eine Qualität von 3N aufweisen, in den folgenden Mengen: Fe=1,72 g, Mn=1,69 g, P=0,476 g und Ge =1,12 g hergestellt. In einer geschlossenen Kugelmühle werden diese Elemente unter schützender Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in qeschützter Atmosphäre erhitzt, bis eine Temperatur von etwa 800 bis 1050 GradC erreicht ist. Danach wird dieses auf eine Temperatur von etwa 650 GradC getempert.

Die Legierung kristallisiert ebenfalls in einer hexagonalen Fe₂P-Struktur.

Eine Legierung von 5 g FeMnP_{0,5}Ge_{0,1}Si_{0,4} mit einer kritischen Temperatur von etwa 300 K wird durch Mischen der reinen Elemente, die eine Qualität von 3N aufweisen, in den folgenden Mengen: Fe=1,93 g, Mn=1,90 g, P=0,535 g, Ge=1,251 g und Si=0,388 g hergestellt. In einer geschlossenen Kugelmühle werden diese Elemente unter schützender Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt, bis eine Temperatur von etwa 800 bis 1050 GradC erreicht ist. Danach wird dieses auf eine Temperatur von etwa 650 GradC getempert. Die Legierung kristallisiert ebenfalls in einer hexagonalen Fe₂P-Struktur.

Eine alternative Ausführung wird erhalten durch Modifikationen von Legierungen der Ausgangsmaterialien anstatt von den reinen Elementen - dies ist besonders vorteilhaft, wenn Si in der Legierung verwendet wird. Dies basiert auf der Tatsache, dass FeSi-Legierungen sehr stabil sind und erhalten werden, wenn reines Fe und Si in der Mühle verfügbar sind.

Eine Legierung von 10 g Fe_{0,86}Mn_{1,14}P_{0,5}Si_{0,35}Ge_{0,15}, die eine kritische Temperatur von 390 K aufweist, wird erhalten durch Mischen der reinen Elemente, die eine Qualität von 3N aufweisen, und der Legierung Fe₂P, die eine Qualität von 2N aufweist (Alpha Aesar 22951), in den folgenden Mengen: Fe₂P=4,18 g, Mn=4,26 g, P=0,148 g, Si=0,669 g und Ge=0,742 g.

In einer geschlossenen Kugelmühle werden diese Elemente unter einer schützenden Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt (gesintert), bis eine Temperatur von etwa 800 bis 1050 Grad C erreicht ist. Danach wird dieses auf eine Temperatur von etwa 650 Grad C getempert. Die vorliegende Erfindung ist nicht auf die beispielhaft beschriebene Ausführung beschränkt. Die Mengen können auf vielfaltige Weise variieren.

In den Zeichnungen sind die der Erfindung zugrundeliegenden Effekte und Ausführungsbeispiele der inneren Struktur des Materials schematisch dargestellt. Es zeigen:
- Fig. 1: den physikalischen Skin-Effekt anhand einer Diagrammdarstellung, d.h. die äquivalente Leitschichtdicke *δ* in mm verschiedener Metalle über der Wechselstromfrequenz f in kHz
- Fig. 2: in einer zusammengestellten Darstellung das Absorptionsverhalten verschiedener Atmosphärengase in Abhängigkeit der Wellenlänge; und
- Fig. 3: die Mikrostruktur von FeMnP_{0,5}Si_{0,5},

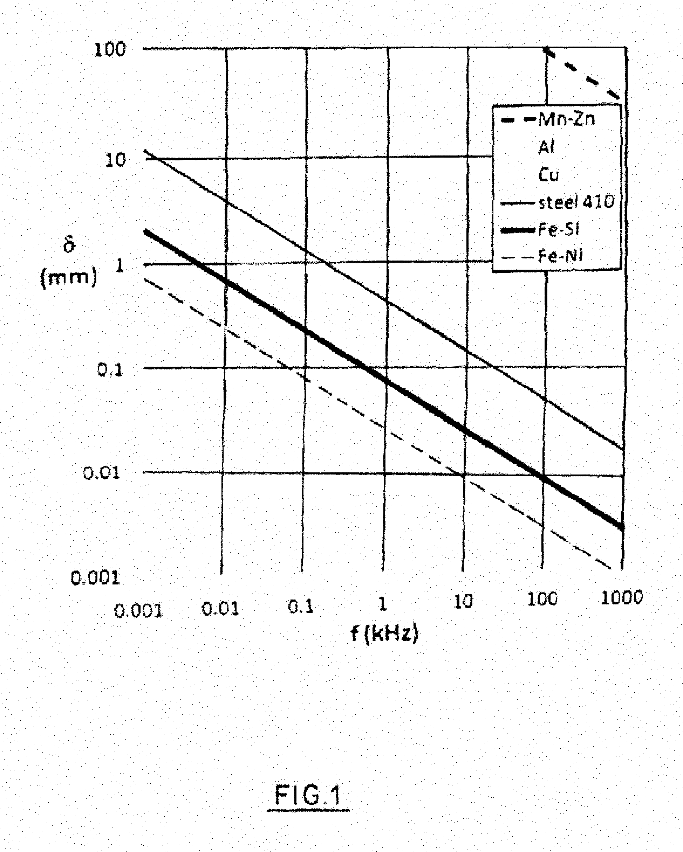

Figur 1 zeigt den physikalischen Effekt der Stromverdrängung in oberflächennahe Randschichten eines stromdurchflossenen Leiters anhand einer Diagrammdarstellung, d.h. die äquivalente Leitschichtdicke *δ* in mm verschiedener Metalle über der Wechselstromfrequenz f in kH.

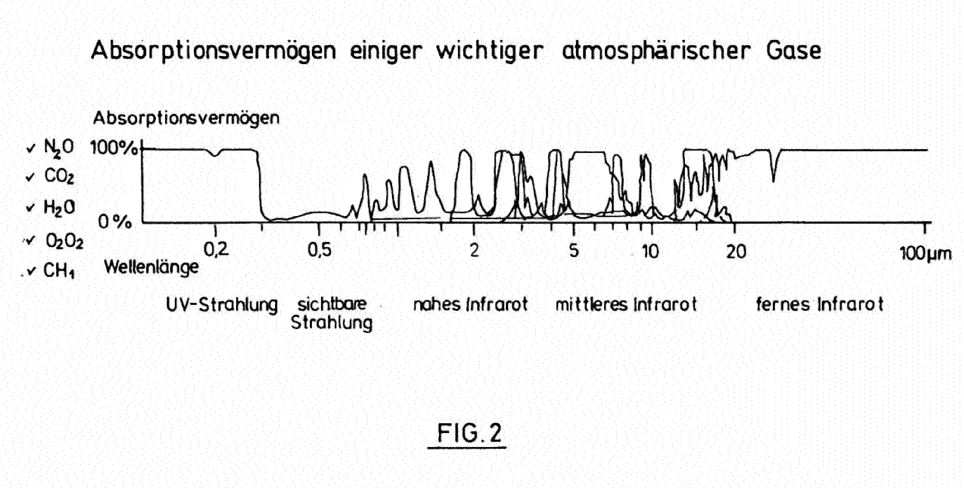

Figur 2 illustriert in einer zusammengestellten Darstellung das Absorptionsverhalten verschiedener Atmosphärengase in Abhängigkeit der Wellenlänge.

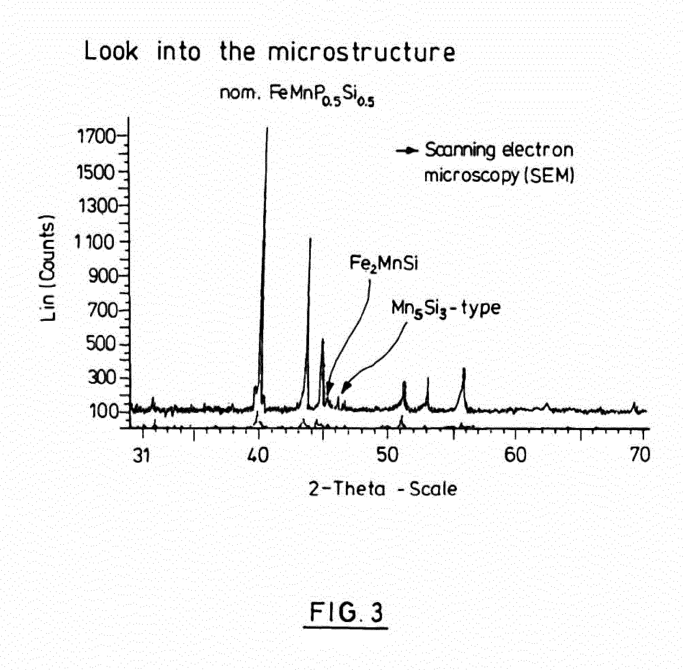

Figur 3 zeigt die bekannte Mikrostruktur von FeMnP_{0,5}Si_{0,5}.

Diese Heusler-Legierungen durchlaufen häufig einen martensitischen Übergang zwischen der martensitischen und der austenitischen Phase, die im Allgemeinen aufgrund der Temperaturinduzierung stattfindet und erster Ordnung ist. Ni₂MnGa-Anordnungen sind ferromagnetisch mit einer Curie-Temperatur von 376 K und einem magnetischen Moment von 4,17 IIB, die weitgehend auf den Mn-Atomen beschränkt ist und mit einem kleinen Moment von etwa 0,3 ILB mit den Ni-Atomen verbunden sind. Wie aus seiner kubischen Struktur erwartet werden kann, hat die Ursprungsphase eine geringe magnetokristalline Anisotropie-Energie (Ha=0,15T). Jedoch hat in ihrer martensitischen Phase die Verbindung eine viel größere Anisotropie (Ha=0,8 T).

Die Martensitumwandlungstemperatur ist nahe 220 K. Diese martensitische Umwandlungstemperatur kann leicht auf etwa Raumtemperatur durch Ändern der Zusammensetzung der Legierung hin zu einer stöchiometrischen Legierung variiert werden. Die Niedrigtemperaturphase entwickelt sich aus der Ausgangsphase durch eine diffusionslose, lageändernde Transformation hin zu einer tetragonalen Struktur, a = b = 5,90 A, c = 5,44 A. Eine Martensitphase nimmt im Allgemeinen den Stamm mit der Transformation assoziiert auf (das ist 6,56% an c für Ni₂MnGa), durch die Bildung von Zwillingsvarianten.

Dies bedeutet, dass sich ein kubischer Kristall teilt in zwei tetragonalen Kristallite, die sich eine Kontaktebene teilen. Diese Zwillinge sind zusammengepackt in passenden Orientierungen, um die Spannungsenergie (ähnlich wie die Magnetisierung eines Ferromagneten auf unterschiedlichen Orientierungen durch Aufbrechen in Domänen, um die magnetostatische Energie zu minimieren). Die Ausrichtung dieser Zwillingsvarianten durch die Bewegung der Zwillingsgrenzen führen zu großen makroskopischen Stämmen.

In der tetragonalen Phase mit höherer magnetischer Anisotropie kann ein angelegtes Magnetfeld eine Änderung der Dehnung verursachen, weshalb diese Materialien als Aktuatoren verwendet werden können. Neben diesem ferromagnetischen Formgedächtniseffekt kann man sehr nah an der martensitischen Übergangstemperatur beobachten, dass eine große Änderung der Magnetisierung für niedrig angelegte Magnetfelder vorliegt. Diese Änderung in der Magnetisierung ist ebenfalls auf die magnetokristalline Anisotropie bezogen.

Diese Änderung in der Magnetisierung, welche zu einer moderaten magnetischen Entropieänderung von wenigen J/molK führt, wird verstärkt, wenn auf einem Einkristall implementiert wird. Wenn die Zusammensetzung in diesem Material in einer Weise vorliegt, dass die magnetische und strukturelle Umwandlung bei der gleichen Temperatur erfolgt und abgestimmt wird auf die größte magnetische Entropie, werden Veränderungen beobachtet.

Für die magnetischen Anwendungen werden extrem große Längenänderungen in dem martensitischen Übergang zu Alterungswirkung führen. Es ist bekannt, bei magnetischen Formgedächtnislegierungen, dass häufig nur Einkristalle gefahren werden, während polykristalline Materialien spontan pulverisieren nach mehreren Zyklen. Man kann die Temperatureffekte durch Druck auf die kristalline Formationen steigern, aber auch Alterungseffekte und Deklination der Polykristallinen werden dann beobachtet.

Fe₂P-basierte Verbindungen bieten die Möglichkeit zur Verhinderung von Ionisationsprozessen, die binäre intermetallische Verbindung Fe₂P kann als Basislegierung für eine praktikable Mischung aus Materialien berücksichtigt werden. Diese Verbindung kristallisiert in der hexagonalen, nicht-punktsymmetrischen FeMn-Phosphor-Verbindung, und hat alle positiven Eigenschaften, um als Transponder für Haus - Kühlsysteme verwendet zu werden.

Substitutionen von Fe und/oder Mn sind denkbar mit AS, Zi, Ni, Ge, Si. Fe belegt die 3g- und 3f-Seiten und p die Ib- und 2c- Seiten. Dadurch erhält man eine Stapelung von abwechselnd P-reichen und P-armen Schichten. Die Neutronenbeugung ergibt, dass das magnetische Moment des Fe auf dem 3g-Seite etwa 2my- B, während das Moment auf der 3f-Seite etwa 1my-B ist. Die hexagonale Form hat schlechte Möglichkeiten, durch die Alterung als magnetische Quelle wiedergewonnen zu werden.

Eine wesentliche Ursache für die elektrisch leitfähigen Eigenschaften der PET-Fasern durch die Dotierung liegt darin, dass in der dielektrischen Trägerstruktur des Polyesters die Metallpartikel zwar räumlich voneinander getrennt sind, dass jedoch die Elektronenwolken der Metallpartikel einander überlappen. Die Einbettung der Dotierungselemente in den Polyester verhindert Zersetzungsprozesse und verhindert äußere Einflüsse.

Insbesondere werden eine Reoxidation, eine Reibungszersetzung vermieden und die Flexibilität verbessert.

Es können im Hinblick auf die Strahlung genau fixierte, scharf begrenzte und reproduzierbare Frequenzgänge erreicht werden.

Insbesondere ist es im Hinblick auf die Strahlungsemission möglich, durch eine geeignete Dotierung durch die Generierung von Infrarotstrahlung im FrequenzBereich von 4,5 µm bis 11,5 µm zu erreichen.

Alternativ zur Verwendung von Fasern aus PET ist es auch möglich, Aramide einzusetzen. Die Herstellung der Fasern kann durch Elektro-Spinningverfahren erfolgen.

Ein typischer Durchmesser der Fasern liegt mit Bereich 2 µm bis 6 µm. Die Dotierung mit den Metallpartikeln erfolgt vorzugsweise in einem Gasplasma.

Eine typische Faserlänge liegt im Bereich von 2 cm bis 4 cm.

## Patentansprüche

1. Faser aus Kunststoff mit elektrischer Leitfähigkeit, wobei das Fasermaterial durch einen Grundwerkstoff aus PET oder Aramid gebildet ist, worin Elemente eingelagert werden, **dadurch gekennzeichnet, dass** die Elemente eine atomare Größe aufweisen und mit einem Abstand derart versehen sind, dass sich Elektronenwolken mindestens bereichsweise überdecken, wobei die eingelagerten Elemente innerhalb des Grundwerkstoffes in einer ungleichen Dichteverteilung eingebracht sind und wobei die eingelagerten Elemente in Materialquerschnittsbereichen mit Stromverdrängungseffekt weniger dicht angeordnet sind als in Materialquerschnittsbereichen mit Stromverdichtungseffekt, wobei die eingelagerten Elemente durch MnFe-Phosphorverbindungen gebildet sind, oder wobei die eingelagerten Elemente durch MnFe(As, P_{w}GeₓSi_{z})ₛ mit x = 0,3-0,7 und w kleiner gleich 1-x und z = 1-x-w gebildet sind, oder wobei die eingelagerten Elemente durch FeMn-Phosphor-Verbindungen mit As,Si-Phosphor-Substitution und gegebenenfalls kombiniert mit La(FeMnP)AICo gebildet sind, oder wobei die eingelagerten Elemente durch Verbindungen mit Mn-Zn gebildet sind, oder wobei die eingelagerten Elemente durch eine Legierung von FeMnP_{0,7}Ge_{0,3} gebildet sind, oder wobei die eingelagerten Elemente durch eine Legierung von FeMnP_{0,5}Ge_{0,5} gebildet sind, oder wobei die eingelagerten Elemente durch eine Legierung von Fe_{0,86}Mn_{1,14}P_{0,5}Si_{0,35}Ge_{0,15} gebildet sind.

2. Faser nach Anspruch 1, **dadurch gekennzeichnet, dass** die eingelagerten Elemente stromleitende Eigenschaften aufweisen, sodass die Faser wenigstens teilweise elektrisch leitend ist.

3. Faser nach Anspruch 1 oder 2, **dadurch gekennzeichnet, dass** die eingelagerten Elemente magnetokalorische Effekte aufweisen, sodass die Faser durch Einwirkung eines Magnetfeldes wenigstens teilweise eine Temperaturerhöhung erfährt.

4. Faser nach einem der vorgehenden Ansprüche, **dadurch gekennzeichnet, dass** die eingelagerten Elemente in oberflächennahen Materialquerschnittsbereichen der äquivalenten Leitschichtdicke *δ* in einer höheren Dichte eingelagerten sind als ausserhalb dieses Bereiches.

5. Faser nach einem der vorgehenden Ansprüche, **dadurch gekennzeichnet, dass** die eingelagerten Elemente durch Dotierung in den Grundwerkstoff eingebracht sind.

## Claims

1. A fibre of plastic material having an electrical conductivity, the fibre material being formed by a base material of PET or aramid in which elements are embedded, **characterized in that** the elements have an atomic size and are provided with a spacing such that electron clouds overlap at least in regions, the embedded elements being incorporated within the base material in an unequal density distribution, and the embedded elements being arranged so as to be less dense in material cross-sectional regions having a current displacement effect than in material cross-sectional regions having a current densification effect, the embedded elements being formed by MnFe phosphorus compounds, or the embedded elements being formed by MnFe(As, P_{w}GeₓSi_{z})ₛ, wherein x = 0.3-0.7 and w less than or equal to 1 - x and z = 1-x-w, or the embedded elements being formed by FeMn phosphorus compounds with As, Si-phosphorus substitution and possibly combined with La(FeMnP)AICo, or the embedded elements being formed by compounds comprising Mn-Zn, or the embedded elements being formed by an alloy of FeMnP_{0,7}Ge_{0,3}, or the embedded elements being formed by an alloy of FeMnP_{0,5}Ge_{0,5}, or the embedded elements being formed by an alloy of Fe_{0,86}Mn_{1,14}P_{0,5}Si_{0,35}Ge_{0,15}.

2. The fibre according to claim 1, **characterized in that** the embedded elements have current-conducting properties such that the fibre is at least partially electrically conductive.

3. The fibre according to claim 1 or 2, **characterized in that** the embedded elements have magneto-caloric effects so that the fibre at least partially undergoes an increase in temperature through the influence of a magnetic field.

4. The fibre according to any of the preceding claims, **characterized in that** the embedded elements in near-surface material cross-sectional regions of the equivalent conducting layer thickness δ are embedded in a higher density than outside this region.

5. The fibre according to any of the preceding claims, **characterized in that** the embedded elements are incorporated into the base material by doping.

## Revendications

1. Fibre en matière plastique à conductivité électrique, la matière fibreuse étant formée par un matériau de base en PET ou en aramide dans lequel des éléments sont encastrés, **caractérisée en ce que** les éléments ont une taille atomique et sont pourvus d'une distance de telle sorte que des nuages d'électrons se recouvrent au moins par zones, les éléments encastrés étant incorporés à l'intérieur du matériau de base selon une distribution de densité inégale, et les éléments encastrés étant agencés de manière moins dense dans des zones de section transversale de matériau à effet de déplacement de courant que dans des zones de section transversale de matériau à effet de densification de courant, les éléments encastrés étant formés par des composés de phosphore et de MnFe, ou les éléments encastrés étant formés par du MnFe(As, P_{w}GeₓSi_{z})ₛ, avec x 0,3-0,7 et w inférieur ou égal à 1 - x et z = 1-x-w, ou les éléments encastrés étant formés par des composés de phosphore et de FeMn avec une substitution de As, Si-phosphore et éventuellement en combinaison avec du La(FeMnP)AICo, ou les éléments encastrés étant formés par des composés comprenant du Mn-Zn, ou les éléments encastrés étant formés par un alliage de FeMnP_{0,7}Ge_{0,3}, ou les éléments encastrés étant formés par un alliage de FeMnP_{0,5}Ge_{0,5}, ou les éléments encastrés étant formés par un alliage de Fe_{0,86}Mn_{1,14}P_{0,5}Si_{0,35}Ge_{0,15}.

2. Fibre selon la revendication 1, **caractérisée en ce que** les éléments encastrés présentent des propriétés de conduction de courant de sorte que la fibre est au moins partiellement électriquement conductrice.

3. Fibre selon la revendication 1 ou 2, **caractérisée en ce que** les éléments encastrés présentent des effets magnétocaloriques de sorte que la fibre est au moins partiellement soumise à une augmentation de température par l'influence d'un champ magnétique.

4. Fibre selon l'une des revendications précédentes, **caractérisé en ce que** dans des zones de section transversale de matériau près de la surface de l'épaisseur de couche conductrice équivalente δ, les éléments encastrés sont encastrés avec une densité plus élevée qu'à l'extérieur de cette zone.

5. Fibre selon l'une des revendications précédentes, **caractérisée en ce que** les éléments encastrés sont incorporés dans le matériau de base par dopage.
